# EUROPÄISCHE PATENTSCHRIFT

(11) **EP 1 911 558 B1**
(45) Veröffentlichungstag und Bekanntmachung des Hinweises auf die Patenterteilung: **22.04.2009**
(21) Anmeldenummer: 07450164.4
(22) Anmeldetag: 27.09.2007
(51) Int. Cl.: B27K 3/15, B32B 21/13, E06B 9/386

(54) **Bauelement, insbesondere für eine Beschattungseinrichtung**
Building element, in particular for a shading device
Elément de construction, en particulier pour un dispositif pare-soleil

(30) Priorität: 28.09.2006 AT 16192006
(43) Veröffentlichungstag der Anmeldung: 16.04.2008
(73) Patentinhaber: Rankl, Gerald, 5322 Hof (AT)
(72) Erfinder: Rankl, Gerald, 5322 Hof (AT)
(74) Vertreter: Hübscher, Helmut

(56) Entgegenhaltungen:
- EP-A- 0 711 655
- JP-A- 5 147 006

## Beschreibung

Die Erfindung bezeiht sich auf ein Bauelement, insbesondere für eine Beschattungseinrichtung, mit einem hölzernen, gegebenenfalls profilierten Körper, der mit einem thermoplastischen, mit Farbpigmenten versetzten Imprägniermittel durchsetzt ist.

Um aus Vollholz spanabhebend gefertigte Holzlamellen für einen Rolladen herzustellen, die trotz einer für Rolläden angemessenen Dicke eine guter Funktionssicherheit gewährleisten können, ist es bekannt (AT 413 732 B), die Lamellen mit einem thermoplastischen Imprägniermittel möglichst porenfrei zu durchsetzen, wodurch einerseits die Festigkeit der Holzlamellen gesteigert und anderseits die Witterungsbeständigkeit des Behanges verbessert wird. Es müssen allerdings die Lamellen aus einem fehlerfreien Holzrohling gefertigt werden, weil Äste oder andere Fehlstellen die mechanischen Eigenschaften der Holzlamellen erheblich beeinträchtigen, obwohl es aus Gründen des äußeren Erscheinungsbildes zum Teil erwünscht ist, das Oberflächenbild durch die Holzmaserung unterbrechende Aststrukturen zu gestalten. Davon abgesehen kann auf die Farbe der Holzlamellen nur durch eine Farbschicht Einfluss genommen werden, durch die die Holzstruktur erkennbar bleibt. Solche durchscheinenden Farbaufträge sind aber meist witterungsanfällig und müssen mit einem erheblichen Arbeitsaufwand von Zeit zu Zeit erneuert werden. Dies gilt nicht nur für die Holzlamellen von Rolläden, sondern für alle im Außenbereich eingesetzten hölzernen Bauelemente, wie sie insbesondere auf dem Gebiet der Beschattung von Wandöffnungen, aber auch für Türen und Fenster sowie deren Läden zum Einsatz kommen.

Zur Verbesserung der mechanischen Eigenschaften von Holzkörpern ist es darüber hinaus bekannt (US 3 407 088 A), den Holzkörper durchgehend mit einem monomeren Vinylchlorid zu tränken und dann mit Hilfe einer Strahlenbehandlung zu polymerisieren. Durch eine in Vinylchlorid lösbare Farbe kann der Holzkörper bei Bedarf somit durchgehend eingefärbt werden. Es kann daher zu keiner Ablösung einer Farbschicht von der Oberfläche des wegen der Imprägnierung nicht saugfähigen Holzwerkstoffes kommen, wobei die Holzstruktur stets erkennbar bleibt. Die durch eine Imprägnierung ermöglichte Verbesserung der mechanischen Eigenschaften eines Holzwerkstoffes reichen jedoch nicht aus, um beispielsweise durch Asteinschlüsse strukturierte Holzoberflächen zu erhalten, ohne die Festigkeitseigenschaften des Bauelementes in Frage zu stellen, insbesondere wenn sich diese Störstellen über die Dicke eines Bauteils erstrecken, wie dies bei Holzlamellen für Beschattungseinrichtungen der Fall ist.

Der Erfindung liegt somit die Aufgabe zugrunde, ein Bauelement der eingangs geschilderten Art so auszugestalten, dass der hölzerne, mit einer dauerhaften, weitgehend witterungsbeständigen Färbung versehen Körper eine für die jeweilige Anwendung ausreichende, von Aststrukturen, die gegebenenfalls das durch die Holzmaserung bestimmte Oberflächenbild unterbrechen, unabhängige Festigkeit aufweist.

Die Erfindung löst die gestellte Aufgabe dadurch, dass der Körper aus wenigstens zwei miteinander verleimten Holzschichten aufgebaut ist.

Da sich in überraschender Weise herausgestellt hat, dass auch mehrschichtig verleimte Plattenkörper durchgehend mit einem eingefärbten Imprägniermittel durchsetzt werden können, können die Vorteile eines durchgehend eingefärbten Bauelementes auch bei einem mehrschichtigen Aufbau des Holzkörpers genützt werden, was unter anderem die Möglichkeit eröffnet, beispielsweise durch Asteinschlüsse strukturierte Holzoberflächen vorzusehen, ohne die Festigkeitseigenschaften des Bauelementes in Frage zu stellen. Die Schwächung der die Sichtfläche bildenden Oberflächenschicht durch Asteinschlüsse wird ja durch den Verbund mit wenigstens einer weiteren Holzschicht ausgeglichen, sodass im Zusammenwirken mit der porenfreien Imprägnierung des Gesamtkörpers gute Festigkeitswerte sichergestellt werden können, obwohl eine Oberflächenstrukturierung durch Asteinschlüsse vorliegt. Die über alle Schichten durchgehende Imprägnierung des mehrschichtig aufgebauten Holzkörpers macht sich außerdem im Bereich der Stirnseiten solcher Körper vorteilhaft bemerkbar, weil sich die Einfärbung des Imprägniermittels auch in einer einheitlichen Farbgebung im Bereich der Stirnflächen des Bauelementes auswirkt.

Mit Hilfe der mit Farbpigmenten versetzten Imprägniermittels und der davon abhängigen durchgehenden Einfärbung des zumindest zweischichtigen Holzwerkstoffes können somit witterungsbeständige Bauelemente gefertigt werden, die sich insbesondere für Beschattungseinrichtungen von Wandöffnungen, aber auch für Fenster und Türen sowie Läden für Fenster und Türen eigenen, nicht zuletzt wegen des Entfallens herkömmliche Wartungsarbeiten für mit einer Oberflächeneinfärbung versehene Holzwerkstoffe. Um im Laufe der Zeit auftretende Oberflächenfehler der Bauelemente auszubessern, braucht ja lediglich eine dünne Oberflächenschicht des Holzwerkstoffes abgezogen zu werden. In diesem Zusammenhang ist zu bedenken, dass die dem Sonnenlicht augesetzten Lamellen solcher Beschattungseinrichtungen vergleichsweise dünnwandig ausgebildet sein sollen und den Holzcharakter durch die Imprägnierung und gleichzeitige Einfärbung nicht verlieren dürfen. Mit dem eingefärbten Imprägniermittel können diese Anforderungen vorteilhaft erfüllt werden, wobei die durch die Imprägnierung zusätzlich erreichte Festigkeitssteigerung der miteinander verleimten Holzschichten eine wesentliche Voraussetzung für das lastabtragende Anbinden der einzelnen Lamellen aneinander darstellt.

## Patentansprüche

1. Bauelement, insbesondere für eine Beschattungseinrichtung, mit einem hölzernen, gegebenenfalls profilierten Körper, der mit einem thermoplastischen, mit Farbpigmenten versetzten Imprägniermittel durchsetzt ist, **dadurch gekennzeichnet, dass** der Körper aus wenigstens zwei miteinander verleimten Holzschichten aufgebaut ist.

## Claims

1. Structural element, in particular for a shading device, having a wooden, optionally profiled body which is penetrated by a thermoplastic impregnating agent, to which colour pigments are added, **characterised in that** the body is constructed from at least two layers of wood which are glued together.

## Revendications

1. Elément de construction, en particulier pour un dispositif pare-soleil, avec un corps, le cas échéant profilé, en bois, imprégné par un agent d'imprégnation thermoplastique mélangé à des pigments de couleur, **caractérisé en ce que** le corps est constitué de deux couches de bois collées ensemble.
